# EUROPEAN PATENT APPLICATION

(11) **EP 0 706 756 A1**
(43) Date of publication of application: **17.04.1996**
(21) Application number: 95307280.8
(22) Date of filing: 13.10.1995
(51) Int. Cl.: A01K 5/02

(54) **A dispenser for foodstuffs**

(30) Priority: 15.10.1994 GB 9420853; 27.10.1994 GB 9421681; 01.03.1995 GB 9504122
(71) Applicant: Vycon Plastics Limited, Kilmarnock, Ayrshire KA3 1NG (GB)
(72) Inventor: Ferguson, Ronald Andrew c/o Vycon Plastics Limited, Ayrshire KA3 1NG (GB)
(74) Representative: Cooper, John

(57) **Abstract**

A dispenser 10, particularly for grinding nuts for feeding birds, has a timer to control its operation. It may also have a light sensor to ensure that the grinder does not operate until the dawn has broken.

## Description

This invention relates to a dispenser for foodstuffs and particularly, but not exclusively, to a grinder.

Known grinders are ill-adapted to operate remotely or without connection to an external power source.

According to a first aspect, the present invention provides an apparatus adapted to grind and dispense a foodstuff characterised in that the apparatus has a timer for controlling dispensing of the foodstuff.

The timer is preferably electronic. The timer may be arranged to dispense foodstuff once a day for a preset duration or more than once a day at preset intervals for preset durations, for example twice a day, three times a day or at any desired frequency.

The apparatus may have its own power source; this may be provided by one or more batteries, preferably rechargeable batteries.

According to a second aspect, the present invention provides an apparatus adapted to dispense a foodstuff characterised in that the apparatus has a timer for controlling dispensing of the foodstuff and an associated sensor for sensing an external condition.

The sensor is preferably a light sensor.

The sensor may be arranged to sense light appearing at dawn each day; this may activate the timer to cause the dispenser to operate either immediately or after a timed delay.

A controller may control operation of the apparatus and may have an associated, independent, power source.

The controller may use the light sensor to follow the changing time of the dawn throughout the year. In this way, the apparatus may be activated at or shortly after dawn each day, operate for a preset duration and remain inactive until dawn the next day.

Where the apparatus is a grinder, it may have a rotor with a helical formation adapted to rotate and thus to force a material to be ground through a grinder mechanism.

According to a third aspect, the present invention provides an animal feeder charaterised in the feeder having a grinder for grinding a foodstuff.

The grinder may comprise a helical grinding screw.

An embodiment of the invention will now be described, by way of example only, with reference to the accompanying drawings of which:
- Fig.1: is an exploded side view of an apparatus in accordance with the invention;
- Fig.2: is a side view of an optional attachment;
- Fig.3: is a side view of a rotor of the apparatus;
- Fig.4: is a perspective view of a barrel of the apparatus;

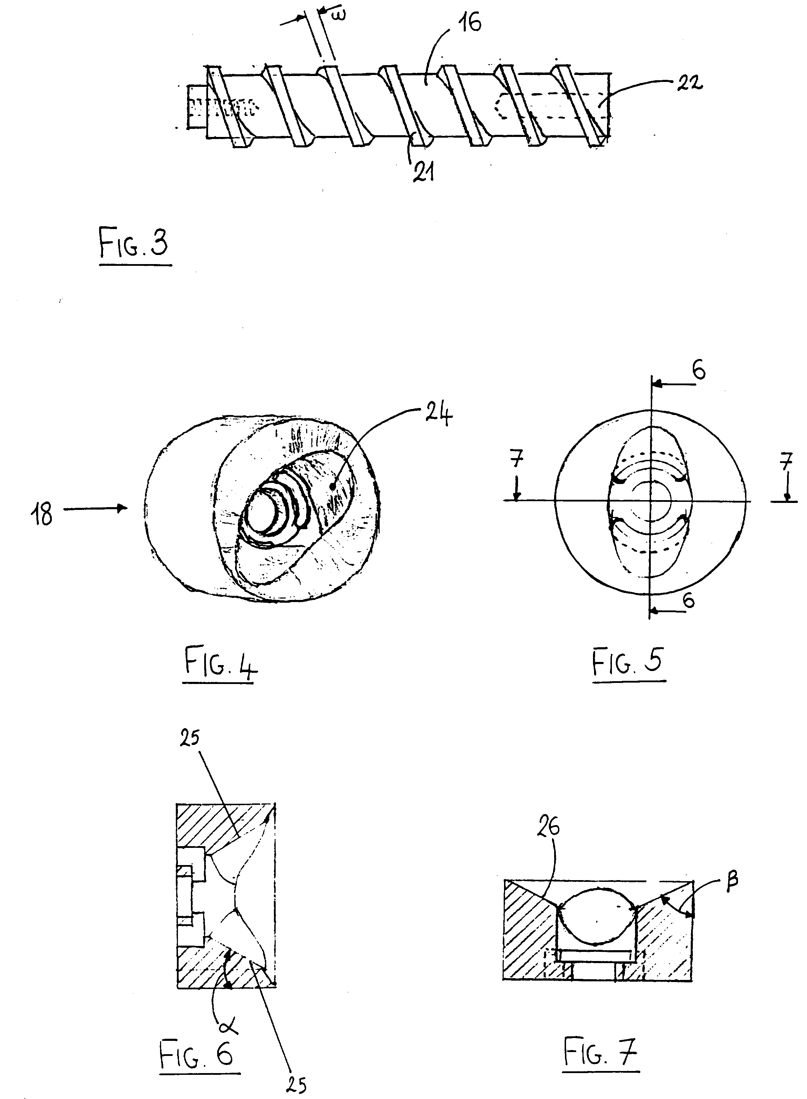

- Fig.5: is a plan view of the barrel;

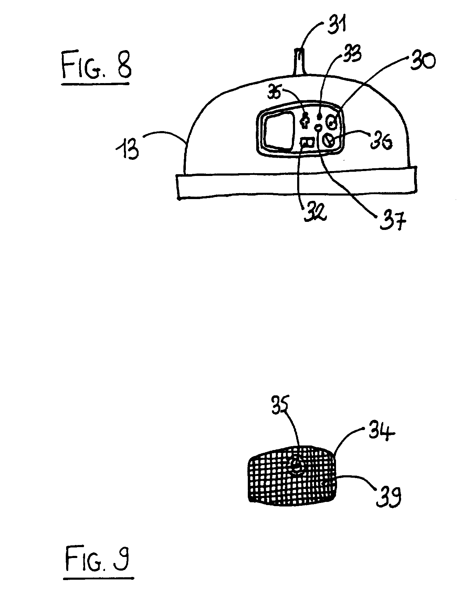

- Fig.6: is a cross section taken along line 6-6 of Fig.5;
- Fig.7: is a cross section taken along line 7-7 of Fig.5;
- Fig.8: is a front view of a top of the apparatus; and
- Fig.9: is a front view of a cover for attachment to the top.

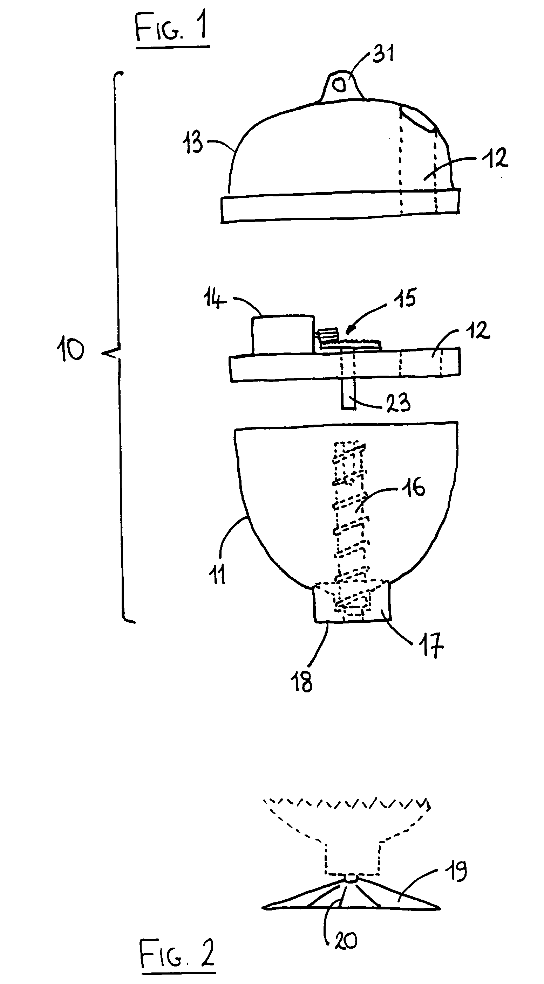

The dispenser 10 shown in Fig.1 has a hard, weatherproof shell and is used as a bird feeder in a garden. Partially broken nut, preferably peanuts, are loaded into a bowl 11 of the grinder 10 through a passageway 12 which passes through a top 13. The top 13 houses a low torque electric motor 14, a rechargeable battery pack (not shown) which provides a power source, a gear mechanism 15 and a control system (not shown) provided on a printed circuit board.

A screw threaded rotor 16 co-operates with a barrel 17 in the bowl 11 to grind the nuts and dispense them from a base 18 of the bowl when the motor 14 is actuated. Passageways (not shown) through which the ground or broken nuts are dispensed are sized to prevent unground nuts from falling through.

A dispersing means may be provided to facilitate scattering of a dispensed foodstuff over an extended area. Fig.2 shows a dispersing disc 19 having ribbed formations 20 which may rotate with the rotor 16.

The plastics rotor 16 has a 14mm pitch, 2mm width w screw thread 21 along its length. A recess 22 co-operates with a drive pin 23 to rotate the rotor 16 by means of a linking drive pin (not shown).

The barrel 18 has a tapered recess 24 with which an end of the rotor 16 co-operates to provides a grinder mechanism. Sides 25 of the recess 24 have a taper angle α of 35°. A feeding taper 26 having an angle β of 58° facilitates feeding of the nuts into the barrel 18 when the rotor 16 turns.

An adapter is used to charge the battery via a socket 30 on the top 13. The grinder 10 is then hung in the garden using an integrally moulded support 31 and is turned on using a switch 32 preferably at about 8am in the morning. This causes the grinder's digital controller and internal clock to turn the grinder on for about 2.5 minutes. The controller then switches the mechanism off and counts for 23 hours. After 23 hours, a light sensor 33 connected to the controller is used to examine external light levels through a removable cover 34 attached to the top 13 by a fastener 35. If daylight above a preset level is sensed, the controller switches the grinder on. If a sufficient level of daylight is not sensed, the controller waits a further hour before switching the mechanism on. In this way, the device accommodates a moving dawn, for example in winter when daylight hours become shorter, so that the grinder always comes on after dawn.

A fuse 36 shuts the grinder down if it overloads, for example if an obstruction jams the grinder mechanism.

A LED 37 illuminates when the device is not grinding to indicate that the battery needs recharging.

The cover 34 has a grid pattern 38 which hides the passageway 12 and controls over which it fits from view whilst providing substantially transparent windows 39 between lines of the grid through which the light sensor 33 can sense ambient light.

## Claims

1. An apparatus (10) adapted to grind and dispense a foodstuff, characterised in that the apparatus has a timer for controlling dispensing of the foodstuff.

2. An apparatus adapted to dispense a foodstuff, characterised in that the apparatus has a timer for controlling dispensing of the foodstuff and an associated sensor (33) for sensing an external condition.

3. An apparatus (10) in accordance with claim 2 in which the sensor (33) forms part of a controller and is used to override or reset the timer.

4. An apparatus (10) in accordance with claim 2 or claim 3 in which the sensor is a light sensor (33).

5. An apparatus (10) in accordance with claim 4 in which the dispensing of the foodstuff from the apparatus is delayed if a light level sensed by the light sensor (33) is below a preset threshold.

6. An apparayus in accordance with any one of claims 2 to 5 in which the sensor is hidden from view behind a cover and in which the cover has at least one window which allows the sensor to sense the external condition.

7. An apparatus (10) in accordance with any preceding claim in which the apparatus (10) has a grinder comprising a helical screw (16) rotatable relative to a barrel (17).

8. An apparatus (10) in accordance with any preceding claim in which the apparatus (10) has its own power supply.

9. An apparatus (10) in accordance with any preceding claim in which the apparatus is a bird feeder.

10. An animal feeder (10) characterised in that the feeder has a grinder for grinding a foodstuff.
